# EUROPÄISCHE PATENTSCHRIFT

(11) **EP 1 047 488 B1**
(45) Veröffentlichungstag und Bekanntmachung des Hinweises auf die Patenterteilung: **20.02.2002**
(21) Anmeldenummer: 98963351.6
(22) Anmeldetag: 12.11.1998
(51) Int. Cl.: B01D 53/56, B01D 53/86, B01D 53/94, B01D 53/90, F01N 3/20, G05D 11/13

(54) **EINRICHTUNG ZUM EINBRINGEN EINES FLÜSSIGEN REDUKTIONSMITTELS IN EINE ABGAS-REINIGUNGSANLAGE**
DEVICE FOR SUPPLYING A REDUCTION AGENT INTO AN EXHAUST-GAS PURIFICATION SYSTEM
DISPOSITIF PERMETTANT D'APPORTER UN AGENT DE REDUCTION DANS UNE INSTALLATION D'EPURATION DES GAZ D'ECHAPPEMENT

(30) Priorität: 12.11.1997 DE 19750138
(43) Veröffentlichungstag der Anmeldung: 02.11.2000
(73) Patentinhaber: SIEMENS AKTIENGESELLSCHAFT, 80333 München (DE)
(72) Erfinder: HOFMANN, Lothar, D-96264 Altenkunstadt (DE); MATHES, Wieland, D-96247 Michelau (DE)
(86) Internationale Anmeldenummer: DE9803335
(87) Internationale Veröffentlichungsnummer: WO9924150

(56) Entgegenhaltungen:
- EP-A- 0 583 878
- EP-A- 0 586 913
- WO-A-96/08639
- WO-A-96/36797
- US-A- 5 522 218

## Beschreibung

Die Erfindung bezieht sich auf eine Einrichtung zum Einbringen eines flüssigen Reduktionsmittels in eine Abgas-Reinigungsanlage. Sie wird insbesondere bei der mit einem geregelten oder gesteuerten Dieselkatalysator (GDK) ausgestatteten Abgas-Reinigungsanlage bei einem Verbrennungsmotor eingesetzt. Sie kann auch bei einer Abgas-Reinigungsanlage für stationäre Dieselmotoren, z.B. bis 1000 kW mechanischer Leistung, eingesetzt werden.

Zur Verminderung der im Abgas eines Verbrennungsmotors enthaltenen Schadstoffe, im besonderen der Stickoxide, hat sich vor allem bei Verbrennungsmotoren, die mit Luftüberschuß betrieben werden, wie z.B. bei Diesel- und Magermotoren, das Prinzip des geregelten oder gesteuerten Dieselkatalysators (GDK) als vorteilhafte Technik erwiesen. Bei dieser im wesentlichen auf dem Verfahren der selektiven katalytischen Reduktion (SCR) beruhenden Technik werden die Stickoxide zusammen mit Ammoniak an einem selektiven Katalysator kontaktiert und dort zu Stickstoff und zu Wasser umgesetzt.

Aufgrund der mit dem Ammoniakeinsatz verbundenen Gefahr, nämlich der Giftigkeit, und aufgrund der durch Ammoniak hervorgerufenen Geruchsbelästigung soll das Ammoniak als solches bei einem mit GDK-System ausgestatteten Verbrennungsmotor nicht im Fahrzeug mitgeführt werden. Das zur katalytischen Umsetzung der Stickoxide erforderliche Reduktionsmittel wird hier in flüssiger Form als wäßrige Harnstofflösung im Fahrzeug mittransportiert. Aus dieser wäßrigen Harnstofflösung wird das Ammoniak durch Hydrolyse jeweils in der augenblicklich gerade zur Umsetzung der Stickoxide benötigten Menge erzeugt. Bei stationären Rauchgas- Reinigungsanlagen, z.B. hinter Kraftwerken, kann reines Ammoniak oder Ammoniak-Wasser verwendet werden.

Gemäß der deutschen Offenlegungsschrift 44 17 238 ist vorgesehen, die Abgasleitung eines LKW-Dieselmotors direkt seitlich an eine zylindrische Einlaufkammer heranzuführen, in der ein trichterförmiges Lochblech angeordnet ist. An der engsten Stelle des Trichters ist ein Eindüsventil vorgesehen, über das eine wäßrige Harnstofflösung in den inneren Raum des Trichters eingedüst wird. Auf diese Weise wird eine homogene Verteilung der Harnstofflösung im Abgas über den gesamten Querschnitt der Einlaufkammer erzielt. An die Einlaufkammer schließen sich ein Hydrolyse-Katalysator, ein DeNOx-Katalysator und ggf. ein Oxidationskatalysator an.

Hiervon unterscheidet sich eine Lösung, die aus der PCT-Anmeldung WO 96/36797 bekannt ist. Um eine ausreichende Vernebelung des zu zerstäubenden flüssigen Reduktionsmittels, d.h. des Reduktionsmittels Harnstoff, vor dem Einbringen in dem mit Schadstoff belasteten Abgasstrom zu erhalten, ist dort eine Mischeinrichtung oder Mischkammer vorgesehen. In diese Mischkammer werden das flüssige Reduktionsmittel und ein Gas, beispielsweise Luft, zur innigen Vermischung miteinander, d.h. zur Bildung einer Emulsion, eingeleitet. Die Mischkammer ist über eine einzige Misch- oder Rohrleitung mit einer Zerstäuberdüse verbunden, welche ihrerseits im Abgasstrom angeordnet ist. Dieser Mischkammer ist ein einstellbares Dosierventil vorgeschaltet, mit dessen Hilfe die pro Zeiteinheit erforderliche Reduktionsmittelmenge vorgegeben wird. Diese pro Zeit durch das geöffnete Dosierventil fließende Reduktionsmittelmenge ist dabei direkt abhängig vom Differenzdruck über dem Dosierventil. Um bei der bekannten Einrichtung eine konstante Dosierrate für das Reduktionsmittel sicherzustellen, ist somit ein konstanter Differenzdruck erforderlich.

Der über dem Dosierventil bei der bekannten Einrichtung herrschende Differenzdruck hängt dabei sowohl vom Druck in der Mischkammer und somit auch vom Gasdruck in der in die Mischkammer führenden Gasleitung als auch von dem Druck in der Reduktionsmittelleitung vor dem Dosierventil ab. Dieser Druck wird durch eine dem Dosierventil zum Fördern des Reduktionsmittels vorgeschaltete Pumpe erzeugt. Sowohl der Gasdruck als auch der Druck in der Reduktionsmittelleitung können jedoch Schwankungen unterliegen.

Der Erfindung liegt nun die Aufgabe zugrunde, eine Einrichtung zum Einbringen eines flüssigen Reduktionsmittels in eine Abgas-Reinigungsanlage anzugeben, mit der die pro Zeit eingebrachte Reduktionsmittelmenge einfach und genau dosiert werden kann.

Die genannte Aufgabe wird gemäß der Erfindung gelöst mit einer Einrichtung zum Einbringen eines flüssigen Reduktionsmittels in eine Abgas-Reinigungsanlage mit den Merkmalen des Patentanspruches 1. Die Einrichtung enthält eine Mischkammer zum Mischen des Reduktionsmittels mit einem Gas, in die eine das Reduktionsmittel führende Reduktionsmittelleitung und eine das Gas führende Gasleitung mündet, sowie eine Steuereinrichtung zur Steuerung des Reduktionsmitteldurchsatzes in der Reduktionsmittelleitung in Abhängigkeit vom Gasdruck in der Gasleitung. Durch diese Maßnahme kann der Reduktionsmitteldurchsatz, d.h. die Menge des pro Zeiteinheit in die Mischkammer injizierten Reduktionsmittels gezielt beeinflußt werden, so daß deren im Stand der Technik gegebene Abhängigkeit vom Gasdruck in der Gasleitung, der im wesentlichen den Druck in der Mischkammer bestimmt, eliminiert werden kann. Durch eine gezielte Steuerung des Reduktionsmitteldurchsatzes, bei der als Stellgröße der den Reduktionsmitteldurchsatz selbst beeinflussende oder störende Gasdruck (Störgröße) verwendet wird, ist es möglich, den Reduktionsmitteldurchsatz unabhängig vom Gasdruck in der Gasleitung konstant zu halten.

In einer besonders bevorzugten Ausgestaltung der Erfindung umfaßt die Steuereinrichtung zur Steuerung des Reduktionsmitteldurchsatzes ein Stellorgan zum Steuern des Drucks in der Reduktionsmittelleitung. Insbesondere ist als Stellorgan ein vom Gasdruck gesteuertes Drucksteuerventil vorgesehen, das vorzugsweise den Druck in der Reduktionsmittelleitung ab Eingang eines einstellbaren und der Mischkammer vorgeschalteten Dosierventils steuert. Da der Reduktionsmitteldurchsatz vom Druckabfall an der Mischkammer vorgeschalteten Dosierventil abhängt, kann der Reduktionsmitteldurchsatz durch Einstellung des Drucks in der Reduktionsmittelleitung vor dem Dosierventil beeinflußt werden. Insbesondere wird dieser Druck so geführt, daß die Druckdifferenz am Dosierventil und somit auch der Reduktionsmitteldurchsatz bei geöffnetem Dosierventil annähernd konstant sind.

In einer Ausführungsform ist das Drucksteuerventil an eine in die Reduktionsmittelleitung mündende Abzweigleitung angeschlossen. Dadurch ist eine Steuerung des Drucks in der Reduktionsmittelleitung durch Entnahme eines Reduktionsmittel-Teilstroms aus der Reduktionsmittelleitung möglich. Die Abzweigleitung ist dabei vorzugsweise in Strömungsrichtung gesehen vor dem Dosierventil an der Reduktionsmittelleitung angeschlossen.

Insbesondere mündet die Abzweigleitung in einen Vorratsbehälter, an dem auch die Reduktionsmittelleitung zur Entnahme des Reduktionsmittels angeschlossen ist. Dadurch ist eine Rückführung des entnommenen Reduktionsmittel-Teilstroms bewirkt.

In einer Ausführungsform ist als Drucksteuerventil ein Dreiwegeventil vorgesehen, das in der Reduktionsmittelleitung angeordnet ist, und an dem die Abzweigleitung angeschlossen ist.

In einer alternativen Ausführungsform ist als Drucksteuerventil ein in der Abzweigleitung angeordnetes Zweiwegeventil vorgesehen.

Insbesondere ist die Steuereinrichtung über eine Druckentnahmeleitung an die Gasleitung angeschlossen, wobei vorzugsweise das Drucksteuerventil pneumatisch steuerbar ist. Dies ermöglicht eine besonders einfache Steuerung des Reduktionsmitteldurchsatzes ohne zusätzliche elektronische Einrichtungen, wie z.B. einen Drucksensor und einen elektrischen Steuerkreis zum Ansteuern eines elektrisch betätigbaren Stellorgans.

Zur weiteren Erläuterung der Erfindung wird auf die Ausführungsbeispiele der Zeichnung verwiesen. Es zeigen:
- FIG 1: eine Einrichtung zum Einbringen eines flüssigen Reduktionsmittels in eine Abgas-Reinigungsanlage gemäß der Erfindung in einer schematischen Darstellung, und
- FIG 2: eine alternative Ausführungsform der Erfindung.

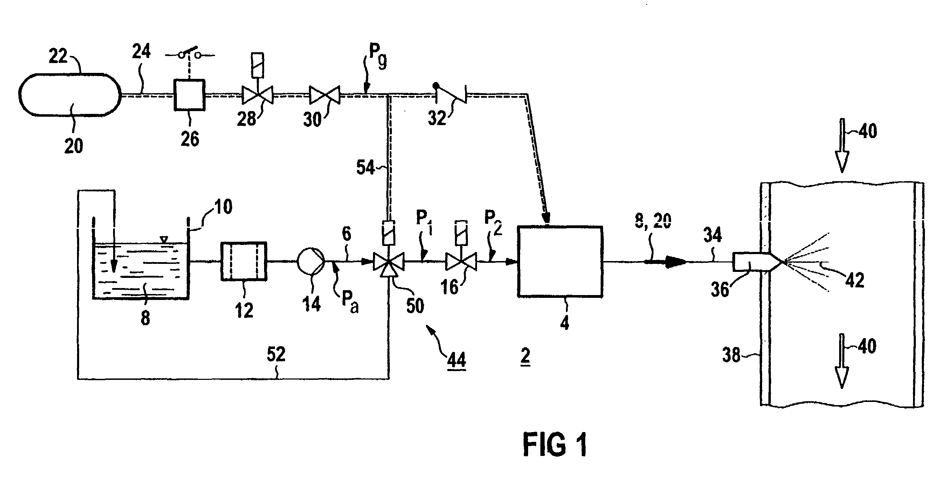

Gemäß FIG 1 umfaßt die erfindungsgemäße Einrichtung 2 eine Mischeinrichtung oder Mischkammer 4, die vorzugsweise gemäß der eingangs zitierten PCT-Anmeldung WO 96/36797 nach dem Vergaserprinzip aufgebaut ist.

In die Mischkammer 4 mündet eine Reduktionsmittelleitung 6 für ein zu zerstäubendes flüssiges Reduktionsmittel 8, beispielsweise wäßrige Harnstofflösung. Das Reduktionsmittel 8 ist in einem Vorratsbehälter untergebracht, der auf dem Fahrzeug, dessen Abgas gereinigt werden soll, mitgeführt wird. Dieser Vorratsbehälter 10 ist über einen Filter 12, eine Pumpe 14 und ein Dosierventil 16, die sich in der Reduktionsmittelleitung 6 befinden, an die Mischkammer 4 angeschlossen.

Die Pumpe 14 dient zum Fördern des Reduktionsmittels 8 aus dem Vorratsbehälter 10 und erzeugt an ihrem Ausgang einen Druck pₐ, der Schwankungen unterliegen kann, die beispielsweise vom Füllstand des Reduktionsmittels 8 im Vorratsbehälter 10 oder von der Verschmutzung des Filters 12 abhängen.

Der Mischkammer 4 ist ein einstellbares Dosierventil 16 vorgeschaltet, das elektromagnetisch betätigbar ist. Dieses Dosierventil 16 ist zwischen einer Auf- und einer Zu-Stellung elektromagnetisch betätigbar. Die Zeitdauer, in der das Dosierventil 16 geöffnet ist, und die Zeitdauer, in der das Dosierventil 16 geschlossen ist, beeinflussen den Reduktionsmitteldurchsatz. Bei geöffnetem Dosierventil 16 hängt der Reduktionsmitteldurchsatz, d.h. die pro Zeiteinheit durch das Dosierventil 16 strömende Reduktionsmittelmenge (Dosierrate), ab von der Einstellung des Dosierventils 16, des Strömungswiderstands in Auf-Stellung und vom eingangsseitigen Druck p₁ in der Reduktionsmittelleitung 6 sowie vom ausgangsseitigen Druck p₂, der im Ausführungsbeispiel, bei dem das Dosierventil 16 unmittelbar der Mischkammer 4 vorgeschaltet ist, annähernd den Druck innerhalb der Mischkammer 4 entspricht.

In die Mischkammer 4 gelangt über eine Gasleitung ein Gas 20, beispielsweise Luft. Dieses Gas 20 mischt sich in der Mischkammer 4 mit dem einströmenden Reduktionsmittel 8. Dabei entsteht ein Aerosol 8, 20, das am Ausgang abgegeben wird. Das Gas 20 ist in einem Druckspeicher 22 untergebracht, der mit einem Auslaß versehen ist. Von diesem Auslaß wird das Gas 20 über einen elektrisch betätigbaren Druckschalter 26, ein Absperrventil 28, ein einstellbares Druckbegrenzungsventil 30 und ein Rückschlagventil 32 in die Mischkammer 4 geleitet.

Die in der Mischkammer 4 erzeugte Mischung 8, 20 gelangt über eine Mischleitung 34 zu einer Zerstäuberdüse 36, die in einem Abgaskanal 38 untergebracht ist. In diesem Abgaskanal 38 strömt das zu reinigende Abgas 40 in Richtung auf eine (nicht gezeigte) Katalysator-Anordnung. Die Zerstäuberdüse 36 sorgt dafür, daß die Mischung aus Reduktionsmittel 8 und Druckgas 20 in Form eines feinen Nebels 42 in den Strom des Abgases 40 eingeblasen und von diesem in Richtung auf die Katalysatoranordnung gleichmäßig verteilt weitergetragen wird.

Eine Steuereinrichtung 44 zum Steuern des Reduktionsmitteldurchsatzes in der Reduktionsmittelleitung 6 enthält ein zwischen dem Dosierventil 16 und der Pumpe 14 angeordnetes und als Dreiwegeventil ausgebildetes Drucksteuerventil 50 zur Steuerung des Drucks p₁ am Eingang des Dosierventils 16, dessen erster und zweiter Weg an die Reduktionsmittelleitung 6 angeschlossen sind, und dessen dritter Weg an eine Abzweigleitung 52 angeschlossen ist, die in den Vorratsbehälter 10 mündet.

Das Drucksteuerventil 50 ist pneumatisch steuerbar und über eine Steuerleitung 54 an die Gasleitung in Strömungsrichtung gesehen hinter dem einstellbaren Druckbegrenzungsventil 30 angeschlossen. Die Stellung des Schließorgans des Drucksteuerventils 50 wird somit von dem in der Gasleitung 24 am Ort der Mündung der Steuerleitung 54 herrschenden Gasdruck p_{g} gesteuert oder eingestellt. In Abhängigkeit dieses Gasdruckes p_{g} wird somit ein Reduktionsmittel-Teilstrom aus der Reduktionsmittelleitung 6 entnommen. Dieser Reduktionsmittel-Teilstrom beträgt bei geschlossenem Drucksteuerventil 50 100% des Gesamtstromes und kann bei vollständig geöffnetem Drucksteuerventil 50 je nach Auslegung nahezu 0% betragen. Mit Hilfe des Gasdruckes p_{g} kann dann der Reduktionsmittel-Teilstrom zwischen 0% und 100% des Gesamtstroms eingestellt werden. Dieser Bereich wird jedoch in der Praxis nicht ausgenutzt. Auf diese Weise wird der Druck p₁ am Eingang des Dosierventils 16 in Abhängigkeit vom Gasdruck pg und damit auch der sich durch die Druckdifferenz p₂ - p₁ abhängige Reduktionsmitteldurchsatz gesteuert. Das Drucksteuerventil 50 wird dabei so gesteuert, daß bei sinkendem Gasdruck p_{g} der über die Abzweigleitung 52 zurückgeführte Reduktionsmittel-Teilstrom erhöht und der eingangsseitige Druck p₁ entsprechend erniedrigt wird, um den vom Gasdruck p_{g} beeinflußten und somit ebenfalls sinkenden Druck p₂ an der Ausgangsseite des Dosierventils 16 zu kompensieren und die Druckdifferenz p₂ - p₁ über dem Dosierventil 16 konstant zu halten. Mit anderen Worten: Die Dosiermenge, d.h. die in einem Zeitabschnitt angegebene Gesamtmenge an Reduktionsmittel kann eindeutig durch die in diesem Zeitabschnitt vorliegende Öffnungsdauer des Dosierventils 16 eingestellt werden, da die Dosierrate, d.h. die pro Zeiteinheit durch clas geöffnete Dosierventil 16 strömende Reduktionsmittelmenge auf Grund der Steuerung des Drucks p₁ konstant bleibt.

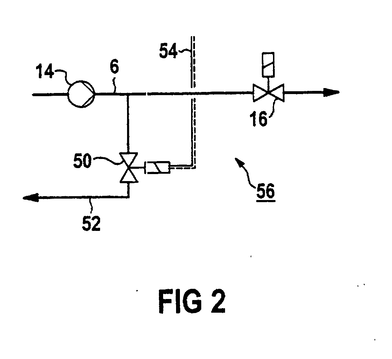

In der Ausführungsform gemäß FIG 2 enthält eine Steuereinrichtung 56 zum Steuern des Reduktionsmitteldurchsatzes in der Reduktionsmittelleitung 6 anstelle des FIG 1 in der Reduktionsmittelleitung 6 vorgesehenen Dreiwegeventils als Drucksteuerventil 50 ein in der Abzweigleitung 52 angeordnetes Zweiwegeventil, das über die Steuerleitung 54 ebenfalls in Abhängigkeit vom Gasdruck in der Gasleitung pneumatisch steuerbar ist und in Abhängigkeit vom Gasdruck die Menge des abgezweigten Reduktionsmittels 8 und somit auch den Druck in der Reduktionsmittelleitung 6 an der Eingangsseite des Dosierventils 16 steuert.

## Patentansprüche

1. Einrichtung (2) zum Einbringen eines flüssigen Reduktionsmittels (8) in eine Abgas-Reinigungsanlage, mit einer Mischkammer (4) zum Mischen des Reduktionsmittels (8) mit einem Gas (20), in die eine das Reduktionsmittel (8) führende Reduktionsmittelleitung (6) sowie eine das Gas (20) führende Gasleitung (24) mündet, und mit einem in der Reduktionsmittelleitung (6) angeordneten Dosierventil (16),
**dadurch gekennzeichnet, daß** eine Steuereinrichtung (44, 56) zur Steuerung des Druckes (p₁) in der Reduktionsmittelleitung (6) in Abhängigkeit vom Gasdruck (p_{g}) in der Gasleitung (24) vorgesehen ist.

2. Einrichtung nach Anspruch 1, bei der die Steuereinrichtung (44; 56) zur Steuerung des Reduktionsmitteldurchsatzes ein Stellorgan zum Steuern des Druckes (p₁) in der Reduktionsmittelleitung (6) umfaßt.

3. Einrichtung nach Anspruch 2, bei der als Stellorgan ein vom Gasdruck (p_{q}) gesteuertes Drucksteuerventil (50) vorgesehen ist.

4. Einrichtung nach Anspruch 3, bei der das Drucksteuerventil (50) zur Steuerung des Drucks (p₁) in der Reduktionsmittelleitung (6) am Eingang eines der Mischkammer (4) vorgeschalteten Dosierventils (16) vorgesehen ist.

5. Einrichtung nach Anspruch 4, bei der das Drucksteuerventil (50) an eine in die Reduktionsmittelleitung (6) mündende Abzweigleitung (52) angeschlossen ist.

6. Einrichtung nach Anspruch 5, bei der die Abzweigleitung (52) in Strömungsrichtung gesehen vor dem Dosierventil (16). an die Reduktionsmittelleitung (6) angeschlossen ist.

7. Einrichtung nach einem der Ansprüche 2 bis 6, bei der die Reduktionsmittelleitung (6) an einen Vorratsbehälter (10) für das Reduktionsmittel (8) angeschlossen ist.

8. Einrichtung nach Anspruch 7, bei der die Abzweigleitung (52) in den Vorratsbehälter (10) mündet.

9. Einrichtung nach einem der Ansprüche 5 bis 8, bei der als Drucksteuerventil (50) ein Dreiwegeventil (6) vorgesehen ist, das in der Reduktionsmittelleitung (6) angeordnet ist, und an dem die Abzweigleitung (52) angeschlossen ist.

10. Einrichtung nach einem der Ansprüche 5 bis 8, bei der als Drucksteuerventil (50) ein in der Abzweigleitung (52) angeordnetes Zweiwegeventil vorgesehen ist.

11. Einrichtung nach einem der vorhergehenden Ansprüche, bei der die Steuereinrichtung (44; 56) über eine Druckentnahmeleitung (54) an die Gasleitung (24) angeschlossen ist.

12. Einrichtung nach Anspruch 11 in Verbindung mit Anspruch 2, bei der das Drucksteuerventil (50) pneumatisch steuerbar ist.

## Claims

1. A device (2) for introducing a liquid reducing agent (8) into an exhaust gas purification system, having a mixing chamber (4) for mixing the reducing agent (8) with a gas (20), into which mixing chamber (4) there open a reducing agent line (6) carrying the reducing agent (8) and a gas line (24) carrying the gas (20), and having a metering valve (16) disposed in the reducing agent line (6),
**characterised in that** a control device (44, 56) is provided for controlling the pressure (p₁) in the reducing agent line (6) as a function of the gas pressure (p_{g}) in the gas line (24).

2. A device according to claim 1, in which the control device (44; 56) for controlling reducing agent throughput comprises a control unit for controlling the pressure (p₁) in the reducing agent line (6).

3. A device according to claim 2, in which a pressure control valve (50) controlled by the gas pressure (p_{g}) is provided as the control unit.

4. A device according to claim 3, in which the pressure control valve (50) is provided for controlling the pressure (p₁) in the reducing agent line (6) at the inlet of a metering valve (16) connected upstream of the mixing chamber (4).

5. A device according to claim 4, in which the pressure control valve (50) is connected to a branch line (52) opening into the reducing agent line (6).

6. A device according to claim 5, in which the branch line (52) is connected to the reducing agent line (6) upstream of the metering valve (16) when viewed in the flow direction.

7. A device according to one of claims 2 to 6, in which the reducing agent line (6) is connected to a storage tank (10) for the reducing agent (8).

8. A device according to claim 7, in which the branch line (52) opens into the storage tank (10).

9. A device according to one of claims 5 to 8, in which the pressure control valve (50) takes the form of a three-way valve (6) which is disposed in the reducing agent line (6) and to which the branch line (52) is connected.

10. A device according to one of claims 5 to 8, in which the pressure control valve (50) takes the form of a two-way valve disposed in the branch line (52).

11. A device according to one of the preceding claims, in which the control device (44; 56) is connected to the gas line (24) via a pressure tap line (54).

12. A device according to claim 11 in conjunction with claim 2, in which the pressure control valve (50) is pneumatically controllable.

## Revendications

1. Dispositif (2) pour introduire un réducteur liquide (8) dans un système d'épuration des gaz d'échappement, comportant une chambre de mélange (4) pour mélanger le réducteur (8) à un gaz (20), chambre dans laquelle débouche une conduite de réducteur (6) qui transporte le réducteur (8) ainsi qu'une conduite de gaz (24) qui transporte le gaz (20), et une soupape de dosage (16), disposée dans la conduite de réducteur (6), **caractérisé en ce qu'**il est prévu un dispositif de commande (44, 56) destiné à commander la pression (p₁) dans la conduite de réducteur (6) en fonction de la pression du gaz (p_{g}) dans la conduite de gaz (24).

2. Dispositif selon la revendication 1, dans lequel le dispositif de commande (44 ; 56) destiné à commander le débit du réducteur comprend un organe de commande destiné à commander la pression (p₁) dans la conduite de réducteur (6).

3. Dispositif selon la revendication 2, dans lequel on prévoit en tant qu'organe de commande une soupape régulatrice de pression (50) commandée par la pression du gaz (p_{g}).

4. Dispositif selon la revendication 3, dans lequel la soupape régulatrice de pression (50) destinée à commander la pression (p₁) dans la conduite de réducteur (6) est prévue à l'entrée d'une soupape de dosage (16) installée en amont de la chambre de mélange (4).

5. Dispositif selon la revendication 4, dans lequel la soupape régulatrice de pression (50) communique avec une conduite de dérivation (52) qui débouche dans la conduite de réducteur (6).

6. Dispositif selon la revendication 5, dans lequel la conduite de dérivation (52) est raccordée à la conduite de réducteur (6) en un point, quand on regarde dans la direction de l'écoulement, situé en amont de la soupape de dosage (16).

7. Dispositif selon l'une des revendications 2 à 6, dans lequel la conduite de réducteur (6) est raccordée à un réservoir (10) destiné au réducteur (8).

8. Dispositif selon la revendication 7, dans lequel la conduite de dérivation (52) débouche dans le réservoir (10).

9. Dispositif selon l'une des revendications 5 à 8, dans lequel on prévoit en tant que soupape régulatrice de pression (50) une vanne à trois voies (6), qui est disposée dans la conduite de réducteur (6) et à laquelle est raccordée la conduite de dérivation (52).

10. Dispositif selon l'une des revendications 5 à 8, dans lequel on prévoit en tant que soupape régulatrice de pression (50) une vanne à deux voies disposée dans la conduite de dérivation (52).

11. Dispositif selon l'une des revendications précédentes, dans lequel le dispositif de commande (44 ; 56) est raccordé par l'intermédiaire d'une conduite de détente (54) à la conduite de gaz (24).

12. Dispositif selon la revendication 11, en liaison avec la revendication 2, dans lequel la soupape régulatrice de pression (50) peut être manoeuvrée par commande pneumatique.
